(19) **Europäisches Patentamt**
**European Patent Office**
**Office européen des brevets**

(11) **EP 1 877 984 B1**

(12) **EUROPEAN PATENT SPECIFICATION**

(45) Date of publication and mention of the grant of the patent:
**07.05.2014 Bulletin 2014/19**

(51) Int Cl.:
***G06T 17/20*** *(2006.01)*

(21) Application number: **06728038.8**

(22) Date of filing: **25.04.2006**

(86) International application number:
**PCT/IB2006/051284**

(87) International publication number:
**WO 2006/117719 (09.11.2006 Gazette 2006/45)**

(54) **MULTI-SURFACE MODELLING**

MODELL AUS MEHREREN OBERFLÄCHEN

MODELISATION MULTI-SURFACE

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.04.2005 EP 05103591**

(43) Date of publication of application:
**16.01.2008 Bulletin 2008/03**

(73) Proprietors:
• **Philips Intellectual Property & Standards GmbH 20099 Hamburg (DE)**
Designated Contracting States:
**DE**
• **Koninklijke Philips N.V. 5656 AE Eindhoven (NL)**

(72) Inventors:
• **VON BERG, Jens**
**Philips Intellectual Property & Standards GmbH 52066 Aachen (DE)**

• **LORENZ, Cristian**
**Philips Intellectual Property & Standards GmbH 52066 Aachen (DE)**

(74) Representative: **Verweij, Petronella Danielle et al**
**Philips Intellectual Property & Standards**
**P.O. Box 220**
**5600 AE Eindhoven (NL)**

(56) References cited:
**EP-A2- 1 221 674**

• **KAUS M R ET AL: "Automated segmentation of the left ventricle in cardiac MRI" MEDICAL IMAGE ANALYSIS, OXFORD UNIVERSITY PRESS, OXOFRD, GB, vol. 8, no. 3, September 2004 (2004-09), pages 245-254, XP004533583 ISSN: 1361-8415**
• **MIN K H ET AL: "Component-based polygonal approximation of soft objects" COMPUTERS AND GRAPHICS, PERGAMON PRESS LTD. OXFORD, GB, vol. 25, no. 2, April 2001 (2001-04), pages 245-257, XP004232465 ISSN: 0097-8493**

**Description**

The present invention relates to the field of surface modelling. In particular, the present invention relates to a method of constructing a multi-surface model from a multi-dimensional dataset of an object of interest, to an image processing device, to an examination apparatus, to a computer-readable medium and to a program element.

EP 1 221 674 A2 discloses a system and a method to obtain surface structures of multidimensional objects, and to represent those surface structures for animation, transmission and display. Four related but independent aspects are described: (1) a method and a system to derive mesh surface descriptions (also called connectivity-wireframes) from objects represented as a scalar field (e.g. discrete multi-dimensional data), scalar functions (e.g. implicit surfaces) or any other surface description, (2) a compact, optionally multi-scalable, optionally view-dependent, optionally animation-friendly, multi-dimensional surface representation method and system comprising a combination of a surface mesh description associated with a reference grid, (3) a digital coding and decoding method and system of a combined surface mesh representation with connectivity information and a reference grid, and (4) a method and system for conversion of other surface descriptions to the combined surface mesh representation and reference grid. The presentation of the surface of an object may be transmitted across a communications channel by means of a bit stream.

The article "Automated segmentation of the left ventricle in cardiac MRI", Michael R. Kaus et al., Medical Image Analysis, vol. 8, no 3, Sept 2004, (pages 245-254 discloses an automated deformable model technique for myocardium segmentation in 3D MRI. The disclosed method integrates various sources of prior knowledge learned from annotated image data into a deformable model. Inter-individual shape variation is represented by a statistical point distribution model, and the spatial relationship of the epi- and endocardium is modelled by adapting two coupled triangular surface meshes. To accommodate variation of grey value appearance around the myocardiac surface, a prior parametric spatially varying feature model is established by classification of grey value surface profiles.

The article "Component-based polygonal approximation of soft objects", Kyung Ha Min et al., Computers and Graphics, vol. 25, no. 2, April 2001, pages 245-257 discloses a new polygonal approximation method for soft objects. While conventional polygonization methods decompose space into small-sized cells and compute many pieces of polygons for the cells, the disclosed method polygonizes a soft object by smoothing an initial polygonal approximation using subdivision surface schemes and an exact computation scheme. The initial polygonal approximation is generated by the union of the polygonal approximations of the components that constitute the soft object.

Modelling of organ surfaces is a method that is used in computer-supported teaching, but also in image-based medical diagnosis and in clinical interventions. A model in this context may provide anatomical information prior to or in addition to the inspection of a patient. Models are used in detection, segmentation, and labelling of organs by providing a deformable model and adapting it to the image. The initial model may be built previously from sample images. Model terms may be defined, e.g. a fixed number of surface triangles with a given topology, and the model geometry may be adapted to each training image. Thus, a correspondence may be established technically between anatomical entities in different images through the model terms, i.e. the position of a dedicated vertex or triangle.

Two-dimensional (mostly closed) manifolds may be used for such a surface modelling. Also, a set of such models may be used, where the distance between the models may be modelled as well.

However, in the cardiac domain it may not be sufficient to model either the cavities (atria, ventricles, and their in- and outflows) or the muscle alone, since both are of importance and the shapes of both mutually depend on each other.

It may be desirable to have an improved surface modelling.

According to the present invention, a method of constructing a multi-surface model from a multi-dimensional dataset of an object of interest may be provided, the method comprising the steps of constructing an adaptive first surface mesh corresponding to a first part of the object of interest, constructing an adaptive second surface mesh corresponding to a second part of the object of interest, and combining the first surface mesh and the second surface mesh, resulting in a multi-surface model of the object of interest.

Thus, according to this invention, the method may automate the construction of the multi-surface model. It may provide for a construction of basic surface meshes for single organ parts. These meshes may then be combined in such a way, that the combination forms a multi-surface model of the object of interest, which may be a non-two-dimensional manifold mesh.

Exemplary embodiments of the present invention are disclosed in the dependent claims.

According to another exemplary embodiment of the present invention, the first surface mesh is a first two-dimensional manifold and the second surface mesh is a second two-dimensional manifold, wherein constructing the first surface mesh comprises the step of adapting the first surface mesh to the first part of the object of interest, and wherein constructing the second surface mesh comprises the step of adapting the second surface mesh to the second part of the object of interest.

This may provide for an automated modelling of different anatomical entities, such as ventricles, atria, and some attached vessels.

According to another exemplary embodiment of the present invention, combining the first surface mesh and the second surface mesh comprises a first operation, a second operation and a third operation, wherein the first, second and third operations are binary. Furthermore, the first operation is a union operation, the second operation is an intersection operation and the third operation is a difference operation.

Application of the three operations during combination of the first surface mesh and the second surface mesh may provide for efficient and accurate building of a multi-surface model.

According to another exemplary embodiment of the present invention, the first surface mesh comprises a first mesh primitive and the second surface mesh comprises a second mesh primitive. Furthermore, the first mesh primitive corresponds to the second mesh primitive. Combining the first surface mesh and the second surface mesh comprises a fourth operation, which is a merging of the first mesh primitive and the second mesh primitive.

By performing a merging or join operation, corresponding faces that occur in both meshes may be unified.

According to another exemplary embodiment of the present invention, the method may further comprise the step of generating a label corresponding to a third mesh primitive of the first surface mesh, wherein the label comprises information relating to the third mesh primitive.

During the reconstruction phase, each mesh primitive of the multi-surface mesh may thus be provided with a corresponding label that determines, which volumes it separates, or which surface it belongs to.

According to another exemplary embodiment of the present invention, the method may further comprise at least one of the steps of refining at least one of the first surface mesh and the second surface mesh, if a granularity of the resulting multi-surface model of the object of interest is below a preset value, and coarsening at least one of the first surface mesh and the second surface mesh, if the granularity of the resulting multi-surface model of the object of interest is above the present value. Therefore, at intersection areas, where edge triangles or mesh primitives may split several times, resulting local over-sampling may be corrected.

According to another exemplary embodiment of the present invention, at least one of constructing the first surface mesh, constructing the second surface mesh, and combining the first surface mesh and the second surface mesh is performed interactively, guided by a user.

This may, e.g. provide for a high flexibility. For example, the user may interactively select the parts which are of specific interest to him, or the user may perform a zoom procedure. Between the various user interactions, surface rendering and adaptation of the surface meshes to a training image may be performed.

According to another exemplary embodiment of the present invention, at least one of constructing the first surface mesh, constructing the second surface mesh, and uniting the first surface mesh and the second surface mesh is performed in a batch mode, wherein a sequence of at least one operation selected from the group consisting of first operation, second operation, third operation, and a fourth operation is predetermined, wherein for the fourth operation:

the first surface mesh comprises a first mesh primitive;
- the second surface mesh comprises a second mesh primitive;
- the first mesh primitive corresponds to the second mesh primitive;

wherein combining the first surface mesh and the second surface mesh comprises the fourth operation being a merging of the first mesh primitive and the second mesh primitive.

Thus, the whole construction may run in a batch mode, where the sequence of required operations is coded like in a programming language. This may provide for a high level of automation.

According to another exemplary embodiment of the present invention, an image processing device for constructing a multi-surface model from a multi-dimensional dataset of an object of interest is provided. The image processing device comprises a memory for storing a multi-dimensional dataset and a calculation unit. The calculation unit is adapted for performing a method according to an exemplary embodiment of the present invention.

According to another exemplary embodiment of the present invention, an examination apparatus for constructing a multi-surface model from a multi-dimensional dataset of an object of interest may be provided as defined in claim 10.

According to another exemplary embodiment of the present invention, the examination apparatus may be selected from the group consisting of ultrasound imaging system, CT (computed tomography) imaging system, CSCT (coherent scatter computed tomography) imaging system, PET (positron emission tomography) imaging system, SPECT (single photon emission computerized tomography) imaging system, ultrasound, and MR (magneto resonance) imaging system. Therefore, diagnostic tools for different diagnosis, for example, between malignant and benign lesions, may be provided.

According to another exemplary embodiment of the present invention, the examination apparatus may further comprise an electromagnetic radiation source adapted for emitting electromagnetic radiation to the object of interest and a collimator arranged between the electromagnetic radiation source and detecting elements, wherein the collimator is adapted for collimating an electromagnetic radiation beam emitted by the electromagnetic radiation source to form a fan-beam or a cone-beam.

Furthermore, according to another exemplary embodiment of the present invention, the examination apparatus may be applied as a baggage inspection apparatus, a medical application apparatus, a material testing apparatus or a material science analysis apparatus. A field of application of the invention may be baggage inspection, since the defined functionality of the invention may allow for a secure and reliable analysis of the content of a baggage item allowing to detect suspicious content, even allowing to determine the type of a material inside such a baggage item.

According to another exemplary embodiment of the present invention, a computer-readable medium may be provided, in which a computer program of constructing a multi-surface model from a multi-dimensional dataset of an object of interest by using an examination apparatus is stored which, when being executed by a processor, is adapted to carry out the above-mentioned method steps.

The present invention also relates to a program element of constructing a multi-surface model from a multi-dimensional dataset of an object of interest, which may be stored on the computer-readable medium. The program element may be adapted to carry out the steps of constructing an adaptive first surface mesh corresponding to a first part of the object of interest, constructing an adaptive second surface mesh corresponding to a second part of the object of interest, and combining the first surface mesh and the second surface mesh, resulting in a multi-surface model of the object of interest.

The program element, according to another exemplary embodiment of the present invention, may preferably be loaded into working memories of a data processor. The data processor may thus be equipped to carry out exemplary embodiments of the methods of the present invention. The computer program may be written in any suitable programming language, such as, for example, C++ and may be stored on a computer-readable medium, such as a CD-ROM. Also, the computer program may be available from a network, such as the WorldWideWeb, from which it may be downloaded into image processing units or processors, or any suitable computers.

It may be seen as the gist of an exemplary embodiment of the present invention that single basic two-dimensional manifold surface meshes are combined to form a multi-surface model, which may be a non-two-dimensional manifold mesh. The combination may comprise a merging or join operation which unites both sets of faces and unifies corresponding faces that occur in both meshes.

These and other aspects of the present invention will become apparent from and elucidated with reference to the embodiments described hereinafter.

Exemplary embodiments of the present invention will be described in the following, with reference to the following drawings.

Fig. 1 shows a simplified schematic representation of an embodiment of a CT scanner according to the present invention.

Fig. 2 shows a cardiac CT image slice of the heart of a patient.

Fig. 3 shows six different stages of a model construction process according to an exemplary embodiment of a method according to the present invention.

Fig. 4 shows a flow-chart of an exemplary embodiment of a method of constructing a multi-surface model from a multi-dimensional dataset of an object of interest according to the present invention.

Fig. 5 shows an exemplary embodiment of an image processing device according to the present invention, for executing an exemplary embodiment of a method in accordance with the present invention.

The illustration in the drawings is schematically. In different drawings, similar or identical elements are provided with the same reference numerals.

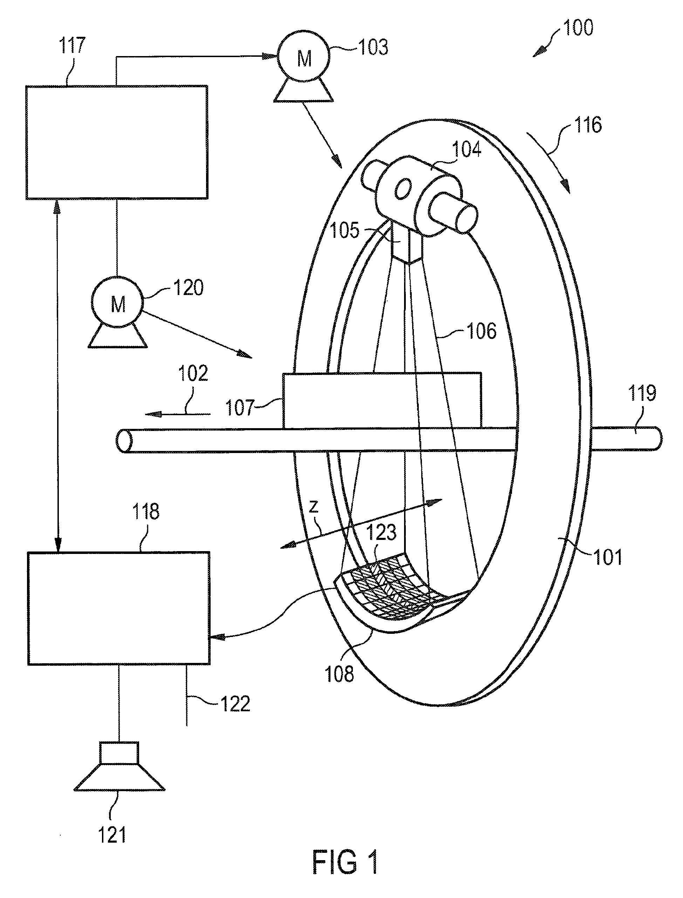

Fig. 1 shows an exemplary embodiment of a CT scanner system according to an exemplary embodiment of the present invention. With reference to this exemplary embodiment, the present invention will be described for the application in medical imaging. However, it should be noted that the present invention is not limited to this application, but may also be applied in the field of baggage inspection, or other industrial applications, such as material testing.

The computer tomography apparatus 100 depicted in Fig. 1 is a cone-beam CT scanner. However, the invention may also be carried out a with a fan-beam geometry. The CT scanner depicted in Fig. 1 comprises a gantry 101, which is rotatable around a rotational axis 102. The gantry 101 is driven by means of a motor 103. Reference numeral 104 designates a source of radiation such as an X-ray source, which, according to an aspect of the present invention, emits a polychromatic radiation.

Reference numeral 105 designates an aperture system which forms the radiation beam emitted from the radiation source to a cone-shaped radiation beam 106. The cone-beam 106 is directed such that it penetrates an object of interest 107 arranged in the centre of the gantry 101, i.e. in an examination region of the CT scanner, and impinges onto the detector 108. As may be taken from Fig. 1, the detector 108 is arranged on the gantry 101 opposite to the source of radiation 104, such that the surface of the detector 108 is covered by the cone-beam 106. The detector 108, which is depicted in Fig. 1, comprises a plurality of detector elements 123 each capable of detecting, in an energy-resolving manner X-rays or individual photons which have penetrated the object of interest 107.

During a scan of the object of interest 107, the source of radiation 104, the aperture system 105 and the detector 108 are rotated along the gantry 101 in the direction indicated by arrow 116. For rotation of the gantry 101 with the source of radiation 104, the aperture system 105 and the detector 108, the motor 103 is connected to a motor control unit 117, which is connected to a calculation or determination unit 118.

In Fig. 1, the object of interest 107 may be a patient or an item of baggage which is disposed on a conveyor belt 119. During the scan of the object of interest 107, while the gantry 101 rotates around the item of baggage 107, the conveyor belt 119 displaces the object of interest 107 along a direction parallel to the rotational axis 102 of the gantry 101. By this, the object of interest 107 is scanned along a helical scan path. The conveyor belt 119 may also be stopped during the scans to thereby measure signal slices. Instead of providing a conveyor belt 119, for example, in medical applications where the object of interest 107 is a patient, a movable table may be used. However, it should be noted that in all of the described cases it may also be possible to perform a circular scan, where there is no displacement in a direction parallel to the rotational axis 102, but only the rotation of the gantry 101 around the rotational axis 102.

Further, it shall be emphasized that, as an alternative to the cone-beam configuration shown in Fig. 1, the invention may be realized by a fan-beam configuration. In order to generate a primary fan-beam, the aperture system 105 may be configured as a slit collimator.

The detector 108 may be connected to the calculation unit 118. The calculation unit 118 may receive the detection result, i.e. the read-outs from the detector elements 123 of the detector 108 and may determine a scanning result on the basis of the read-outs. Furthermore, the calculation unit 118 communicates with the motor control unit 117 in order to coordinate the movement of the gantry 101 with motors 103 and 120 with the conveyor belt 119.

The calculation unit 118 may be adapted for constructing an image from read-outs of the detector 108 using a statistical method according to an exemplary embodiment of the present invention. A reconstructed image generated by the calculation unit 118 may be output to a display (not shown in Fig. 1) via an interface 122.

The calculation unit 118 may be realized by a data processor to process read-outs from the detector elements 123 of the detector 108.

Furthermore, as may be taken from Fig. 1, the calculation unit 118 may be connected to a loudspeaker 121, for example, to automatically output an alarm in case of the detection of suspicious material in the item of baggage 107.

The computer tomography apparatus 100 for examination of the object of interest 107 includes the detector 108 having the plurality of detecting elements 123 arranged in a matrix-like manner, each being adapted to detect X-rays in a threshold-based and thus energy-resolved manner. Furthermore, the computer tomography apparatus 100 comprises the determination unit or reconstruction unit 118 adapted for constructing a multi-surface model from a multi-dimensional dataset of an object of interest 107.

The computer tomography apparatus 100 comprises the X-ray source 104 adapted to emit X-rays to the object of interest 107. The collimator 105 provided between the electromagnetic radiation source 104 and the detecting elements 123 is adapted to collimate an electromagnetic radiation beam emitted from the electromagnetic radiation source 104 to form a cone-beam. Alternatively, not shown in Fig. 1, a slit collimator may be used instead of collimator 105 to produce a fan-beam. The detecting elements 123 form a multi-slice detector array 108. The computer tomography apparatus 100 may be configured as a medical imaging apparatus.

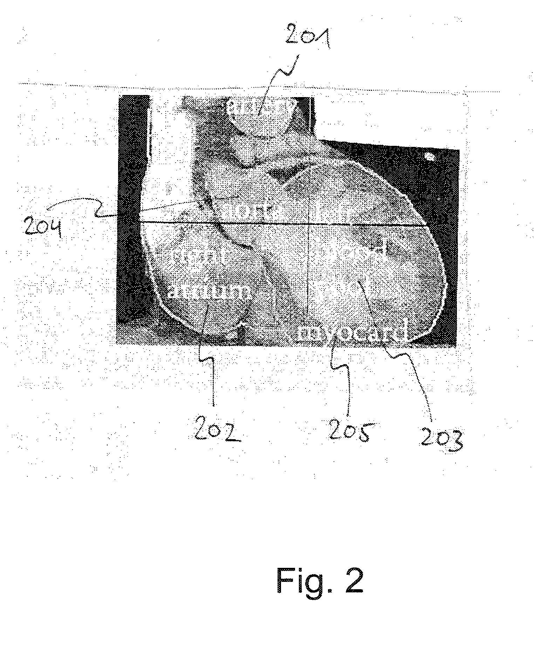

Fig. 2 shows a cardiac CT image depicting an image slice of a heart. As may be seen from Fig. 2, cross-sections of the artery 201, the right atrium 202, the left blood pool 203, the aorta 204 and a cross-section of the myocardium 205, are clearly visible. Therefore, the topology of the model may result in manifold kinds of neighbourhoods. It should be noted, that the image shows an adaptation of the multi-surface model to an unseen image, thus segmenting and labelling its anatomical components.

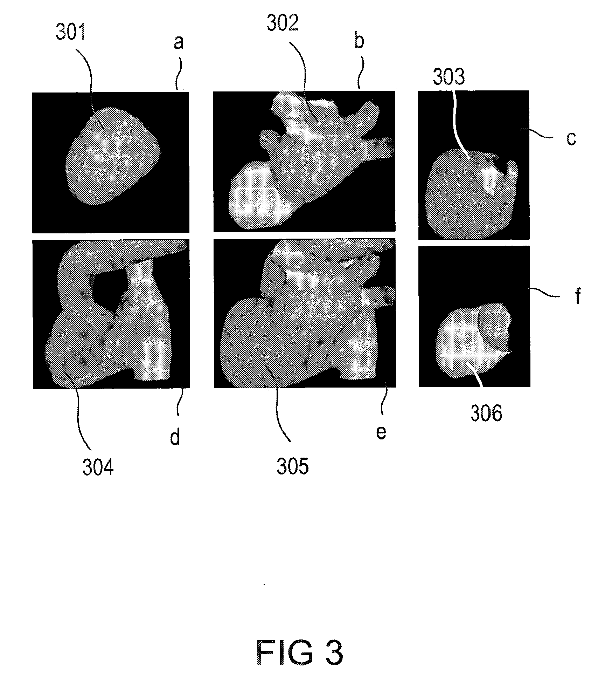

Fig. 3 shows six different stages of a model construction process according to an exemplary embodiment of a method according to the present invention. Stage (a) shows a basic mesh 301, which is adaptive and may be adapted to a certain, predetermined part of the object of interest (i.e. the left atrium of the heart). Stages (b - d) show intermediate meshes, which have been adapted or combined according to an exemplary embodiment of the present invention. Stage (b) shows the left blood pool 302, stage (c) shows a left muscle 303 and stage (d) shows a right blood pool 304. Stage (e) shows the final multi-surface model of the heart, comprising left blood pool 302, left muscle 303 and right blood pool 304. Stage (f) shows the interior of the left ventricle 305 only, which, according to another exemplary embodiment of the present invention, may be constructed as a sub model from the multi-surface model of stage (e).

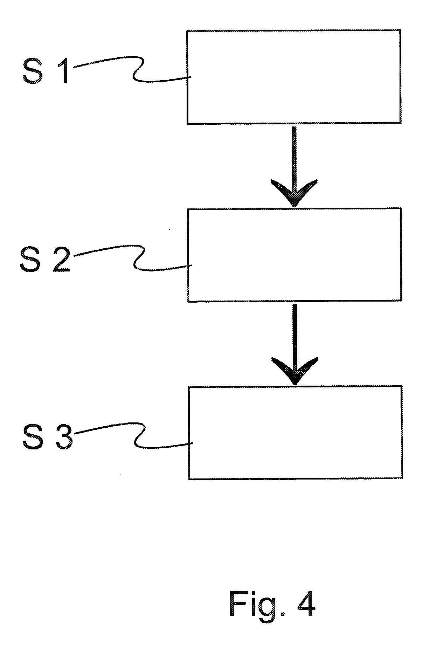

Fig. 4 shows a flow-chart of an exemplary embodiment of a method of constructing a multi-surface model from a multi-dimensional dataset of an object of interest (e.g. a heart) according to an exemplary embodiment of the present invention. The modelling framework may automate the construction of a multi-surface model. It may provide for a construction of basic surface meshes for single organ parts that are two-dimensional manifolds. Starting from simple geometric shapes like spheres and tubes (as depicted in Fig. 3, stage (a)), the surface meshes may be adapted to the corresponding parts of the target organ of a training image.

The central part of the framework may combine these basic meshes and construct a multi-surface model from the basic meshes, which may be a non-two-dimensional manifold. The multi-surface model of the object of interest may enclose different volumes that may be connective (share a common surface), non-connective, or overlapping.

During the reconstruction phase, each mesh primitive of the multi-surface mesh may get labelled. The mesh primitives may, for example, be triangles. The labelling may determine, which volumes each mesh primitive separates, or which surface it belongs to. This may be an important feature not only for visualization of the model, but also for its adaptation to images, where different image features have to be considered for different organ parts.

According to an exemplary embodiment of the present invention, the framework may provide a construction of a multi-surface triangular model enclosing all blood-filled cavities and the main myocardium as well as adapt this model to unseen images.

Four basic operators may be used in the multi-surface mesh construction phase. They may be binary, meaning that they may combine two meshes into one. Three of the operators (union operator, intersection operator, difference operator) may consider the enclosed volumes of two meshes, apply a set operation on them and yield the surface of the set operation. According to an aspect of the present invention, these operators may be used in the context of volumetric images of deformable surface models.

Both operands as well as the operation result may be two-dimensional manifolds. An additional fourth operator (join or merge) may result in a non-two-dimensional manifold. The fourth operator may unite both sets of triangles or mesh primitives (which may have other shapes than triangular shapes, e.g. polygonal shapes) but may unify corresponding triangles that occur in both meshes. These operators, successively applied on the basic surface meshes, may be sufficient to build the final multi-surface model. Additionally, mesh refinement or coarsening may be performed, if the resulting model exceeds or falls below a given spatial granularity. This may be of particular importance at intersection areas, where edge triangles or mesh primitives are usually split several times, which may result in local over-sampling that may require correction.

It should be noted, that, according to an aspect of the present invention, the first surface mesh or the second surface mesh may comprise a plurality of basic surface meshes (on which at least one of the basic operations has been already applied). Therefore, an iterative or step-like construction of the multi-surface model of the object of interest 107 may be provided.

According to an exemplary embodiment of the present invention, construction may be performed interactively guided by a user with immediate surface rendering and adaptation to a training image. The construction process may also run in a batch mode, in which the sequence of required operations may be coded in a programming language manner.

According to an aspect of the present invention, the model may cover the blood pool of both the left and the right heart. The blood pools of the ventricles may be distinguishable from those of the atria. All attached vessels may also be modelled, i.e. the aorta, the pulmonary artery, the vena cava, and the pulmonary vein trunks. Furthermore, also the left myocardium may be represented in the model.

Inclusion of adjacent volumetric entities may require a surface modelling scheme beyond two-dimensional manifolds. According to an aspect of the present invention, the mesh primitives are triangular faces. There may be faces with more than three neighbours wherever multiple surfaces share an edge. In order to enable multiscale / multi-resolution approaches or to just find an ideal trade-off between accuracy and complexity, a multi-resolution representation of the surface discretization may be performed.

The initial step S1 may be the construction of single basic shapes, for example, spheres for the atria, tubes for attached vessels, and opened ellipsoids for ventricles. Each one of the adaptive basic shapes may be a surface mesh, which comprises a plurality of mesh primitives (like triangles, e.g.), and has the form of a two-dimensional manifold. Each one of the basic shapes may model an anatomical entity.

In a second step S2, the basic shapes may be positioned in a training image and adapted to the corresponding entities. Furthermore, a re-sampling may be performed in order to provide for a defined level of granularity. This re-sampling may comprise a refining of a particular surface mesh, if a granularity of the surface mesh is below a preset or predetermined granularity value. Furthermore, the re-sampling may comprise a coarsening of a surface mesh, if the granularity of the surface mesh is above the preset granularity value.

A third step S3 may combine the single basic two-dimensional manifolds resulting in a formation of the multi-surface model. The combination step S3 may be performed by a successive application of four basic operations on surface meshes, starting with the basic meshes. There may be volumetric set operations that may consider the enclosed volume of two meshes, apply the union ($\cup$) or the difference ($\setminus$) operation on them, and yield the resulting surface mesh. Each of these operations may be defined as BxB→B, where m B may be a two-dimensional manifold mesh. As a further constraint on these operations, the intersection line between both meshes may be closed polygons. This may require open basic meshes to fully overlap with their neighbours (e.g. ventricle with atrium).

The join or merge operator (0) may be defined as BxB→M, where M may be a non-two-dimensional manifold mesh. The join operator may just unite both sets of faces and may unify corresponding faces that occur in both meshes.

Furthermore, a unary operator $c_1$ (M→M) may remove all edges smaller than given by parameter 1 and may preserve the triangles' labels. The unary operator may be used in order to replace auxiliary triangles created by volumetric set operations. The left blood pool $p_1$ B may be built by

$$p_l = c_l \left( v_1 \cup v_2 \cup v_3 \cup v_4 \cup a_l \cup v_l \cup a \right), \qquad (1)$$

in order to construct the complete multi-surface model , the first intermediate meshes $a_1$ and $a_2$ may be constructed by

$$a_1 = c_l \left( v_b \setminus p_l \right) \qquad (2)$$

$$a_2 = c_l \left( v_b \cup p_l \right), \qquad (3)$$

where $a_1$ may now exactly enclose the left myocardium. The complete left heart model may be built by

$$\bar{h}_l = a_1 \diamond a_2, \qquad (4)$$

and the right blood pool may be built by

$$p_r = c_l \left( a_r \cup v_r \cup a_p \cup v_l \cup v_s \right) \setminus a_1. \qquad (5)$$

Left and right part may be fused to

$$\bar{h} = \bar{h}_l \diamond p_r. \qquad (6)$$

Referring now to Fig. 3, some basic (a), intermediate (b-d), and the final mesh (e) $\bar{h}$ may be rendered from the same viewing position. The edge size may be set to range between 2,5 mm and 5 mm. Also, other sub-meshes than those required to built the final mesh may be constructed, for instance the blood pool of the left ventricle excluding the left atrium by

$$p_b = c_l \quad a_l \qquad (7)$$

In the resulting multi-surface model of the object of interest, each face may be assigned a label that indicates the anatomical structure it belongs to. This information may be derived by storing which of the initial basic shapes of a face originates from. The basic shapes may be left atrium $a_1$, left ventricle endocardium (inner part $v_i$) left ventricle epicardium (outer part $v_o$), aorta a, vena cava superior $v_s$, vena cava inferior $v_1$, right atrium $a_r$, right ventricle $v_r$, pulmonary artery $a_p$ (right branch only), and the pulmonary vein trunks ($v_1$, $v_2$, $v_3$, $v_4$) that may drain into the left atrium.

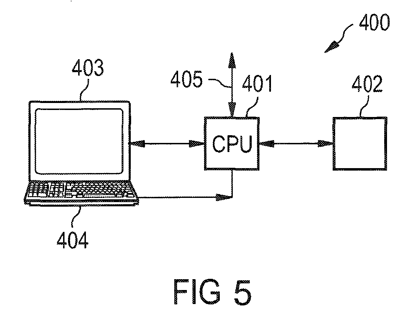

Fig. 5 depicts an exemplary embodiment of an image processing device according to the present invention for executing an exemplary embodiment of the method in accordance with the present invention. The image processing device 400 depicted in Fig. 5 comprises a central processing unit (CPU) or image processor 401 connected to a memory 402 for storing an image depicting an object of interest, such as a patient or an item of baggage. The data processor 401 may be connected to a plurality of input/output network for diagnosis devices, such as a CT device. The data processor 401 may furthermore be connected to a display device 403, for example, a computer monitor, for displaying information or an image computed or adapted in the data processor 401. An operator or user may interact with the data processor 401 via a keyboard 404 and/or other output devices, which are not depicted in Fig. 5. Furthermore, via the bus system 405, it may also be possible to connect the image processing and control processor 401 to, for example, a motion monitor, which monitors a motion of the object of interest. In case, for example, a lung of a patient is imaged, the motion sensor may be an exhalation sensor. In case the heart is imaged, the motion sensor may be an electrocardiograph forming an electrocardiogram as a basis for compensating for motions of the heart, e.g. by the method of cardiac gating.

The examination of an object of interest according to the present invention may allow for a construction of a multi-surface model, multi-dimensional dataset of the object of interest, resulting in a merging of corresponding mesh primitive faces that occur in multiple meshes. The images of the object of interest may be acquired by CT or other scanner systems, such as MRI (magneto resonance imaging) scanner systems, PET (positron emission tomography) scanner systems, SPECT (single photon emission computerized tomography) scanner systems or ultrasound imaging systems.

Exemplary embodiments of the invention may be sold as a software option to CT scanner console, imaging work stations, diagnostic medical workstations, or PACS (picture archiving and communication system) work stations. Applications are for instance cardio-vascular screening, cardiac electrophysiology.

It should be noted that the term "comprising" does not exclude other elements or steps and the "a" or "an" does not exclude a plurality and that a single processor or system may fulfill the functions of several means or units recited in the claims. Also elements described in association with different embodiments may be combined.

It should also be noted, that any reference signs in the claims shall not be construed as limiting the scope of claims.

**Claims**

1. A method of constructing a multi-surface model from a multi-dimensional dataset of an object of interest (107), the method comprising the steps of:

   constructing an adaptive first surface mesh corresponding to a first part of the object of interest (107);
   constructing an adaptive second surface mesh corresponding to a second part of the object of interest (107);
   combining the first surface mesh and the second surface mesh, resulting in a multi-surface model of the object of interest (107).

2. The method of claim 1,
   wherein the first surface mesh is a first two-dimensional manifold and the second surface mesh is a second two-dimensional manifold;
   wherein constructing the first surface mesh comprises the step of adapting the first surface mesh to the first part of the object of interest (107); and
   wherein constructing the second surface mesh comprises the step of adapting the second surface mesh to the second part of the object of interest (107).

3. The method of claim 1,
   wherein combining the first surface mesh and the second surface mesh comprises a first operation, a second operation and a third operation;
   wherein the first, second and third operations are binary;
   wherein the first operation is a union operation;
   wherein the second operation is an intersection operation; and
   wherein the third operation is a difference operation.

4. The method of claim 1,
   wherein the first surface mesh comprises a first mesh primitive;
   wherein the second surface mesh comprises a second mesh primitive;
   wherein the first mesh primitive corresponds to the second mesh primitive;
   wherein combining the first surface mesh and the second surface mesh comprises a fourth operation;
   wherein the fourth operation is a merging of the first mesh primitive and the second mesh primitive.

5. The method of claim 1, further comprising the step of:

   generating a label corresponding to a third mesh primitive of the first surface mesh;
   wherein the label comprises information relating to the third mesh primitive.

6. The method of claim 1, further comprising at least one of the steps of:

   refining at least one of the first surface mesh and the second surface mesh, if a granularity of the resulting multi-surface model of the object of interest (107) is below a preset value; and
coarsening at least one of the first surface mesh and the second surface mesh, if the granularity of the resulting multi-surface model of the object of interest (107) is above the preset value.

7. The method of claim 1,
wherein at least one of constructing the first surface mesh, constructing the second surface mesh, and combining the first surface mesh and the second surface mesh is performed interactively, guided by a user.

8. The method of claim 3,
wherein at least one of constructing the first surface mesh, constructing the second surface mesh, and uniting the first surface mesh and the second surface mesh is performed in a batch mode;
wherein a sequence of at least one operation selected from the group consisting of first operation, second operation, third operation, and a fourth operation is predetermined;
wherein for the fourth operation:

- the first surface mesh comprises a first mesh primitive;
- the second surface mesh comprises a second mesh primitive;
- the first mesh primitive corresponds to the second mesh primitive;

wherein combining the first surface mesh and the second surface mesh comprises the fourth operation being a merging of the first mesh primitive and the second mesh primitive.

9. An image processing device for constructing a multi-surface model from a multi-dimensional dataset of an object of interest (107), the image processing device comprising:

a memory for storing a multi-dimensional dataset;
a calculation unit (118), being adapted for:

constructing an adaptive first surface mesh corresponding to a first part of the object of interest (107);
constructing an adaptive second surface mesh corresponding to a second part of the object of interest (107);
combining the first surface mesh and the second surface mesh, resulting in a multi-surface model of the object of interest (107).

10. An examination apparatus for constructing a multi-surface model from a multi-dimensional dataset of an object of interest (107), the examination apparatus comprising the image processing device of claim 9.

11. The examination apparatus of claim 10,
wherein the examination apparatus (100) is selected from the group consisting of ultrasound imaging system, computed tomography imaging system, coherent scatter computed tomography imaging system, positron emission tomography imaging system, single photon emission computerized tomography imaging system, and magneto resonance imaging system.

12. The examination apparatus of claim 10, further comprising:

an electromagnetic radiation source (104) adapted for emitting electromagnetic radiation to the object of interest (107); and
a collimator (105) arranged between the electromagnetic radiation source (104) and detecting elements (123);

wherein the collimator (105) is adapted for collimating an electromagnetic radiation beam emitted by the electromagnetic radiation source (104) to form a fan-beam or a cone-beam.

13. The examination apparatus of claim 10, configured as one of the group consisting of a baggage inspection apparatus, a medical application apparatus, a material testing apparatus and a material science analysis apparatus.

14. A computer-readable medium (402), in which a computer program of constructing a multi-surface model from a multi-dimensional dataset of an object of interest (107) by using an examination apparatus (100) is stored which, when being executed by a processor (401), is adapted to carry out the steps of:

9

EP 1 877 984 B1

constructing an adaptive first surface mesh corresponding to a first part of the object of interest (107);
constructing an adaptive second surface mesh corresponding to a second part of the object of interest (107);
combining the first surface mesh and the second surface mesh, resulting in a multi-surface model of the object of interest (107).

15. A program element of constructing a multi-surface model from a multi-dimensional dataset of an object of interest (107), which, when being executed by a processor (401), is adapted to carry out the steps of:

constructing an adaptive first surface mesh corresponding to a first part of the object of interest (107);
constructing an adaptive second surface mesh corresponding to a second part of the object of interest (107);
combining the first surface mesh and the second surface mesh, resulting in a multi-surface model of the object of interest (107).

**Patentansprüche**

1. Verfahren zur Konstruktion eines Mehrflächenmodells aus einem mehrdimensionalen Datensatz eines interessierenden Objekts (107), wobei das Verfahren die folgenden Schritte umfasst:

Konstruktion eines anpassungsfähigen ersten Flächennetzes, das einem ersten Teil des interessierenden Objekts (107) entspricht,
Konstruktion eines anpassungsfähigen zweiten Flächennetzes, das einem zweiten Teil des interessierenden Objekts (107) entspricht,
Kombination des ersten Flächennetzes und des zweiten Flächennetzes, sodass sich ein Mehrflächenmodell des interessierenden Objekts (107) ergibt.

2. Verfahren nach Anspruch 1,
wobei das erste Flächennetz eine erste zweidimensionale Mannigfaltigkeit und das zweite Flächennetz eine zweite zweidimensionale Mannigfaltigkeit ist,
wobei die Konstruktion des ersten Flächennetzes den Schritt der Anpassung der ersten Flächennetzes an den ersten Teil des interessierenden Objekts (107) umfasst und
wobei die Konstruktion des zweiten Flächennetzes den Schritt der Anpassung des zweiten Flächennetzes an den zweiten Teil des interessierenden Objekts (107) umfasst.

3. Verfahren nach Anspruch 1,
wobei die Kombination des ersten Flächennetzes und des zweiten Flächennetzes eine erste Operation, eine zweite Operation und eine dritte Operation umfasst,
wobei die erste, die zweite und die dritte Operation binär sind,
wobei die erste Operation eine Vereinigungsoperation ist,
wobei die zweite Operation eine Schnittoperation ist und
wobei die dritte Operation eine Differenzoperation ist.

4. Verfahren nach Anspruch 1,
wobei das erste Flächennetz ein erstes Netzgrundelement umfasst,
wobei das zweite Flächennetz ein zweites Netzgrundelement umfasst,
wobei das erste Netzgrundelement dem zweiten Netzgrundelement entspricht,
wobei die Kombination des ersten Flächennetzes und des zweiten Flächennetzes eine vierte Operation umfasst,
wobei die vierte Operation eine Zusammenführung des ersten Netzgrundelements und des zweiten Netzgrundelements ist.

5. Verfahren nach Anspruch 1, das ferner den folgenden Schritt umfasst:

Erzeugung eines Labels, das einem dritten Netzgrundelement des ersten Flächennetzes entspricht,
wobei das Label Informationen hinsichtlich des dritten Netzgrundelements umfasst.

6. Verfahren nach Anspruch 1, das ferner zumindest einen der folgenden Schritte umfasst:

Verfeinerung zumindest entweder des ersten Flächennetzes oder des zweiten Flächennetzes, falls die Granularität des resultierenden Mehrflächenmodells des interessierenden Objekts (107) unter einem voreingestellten Wert liegt, und

Vergröberung zumindest entweder des ersten Flächennetzes oder des zweiten Flächennetzes, wenn die Granularität des resultierenden Mehrflächenmodells über dem voreingestellten Wert liegt.

7. Verfahren nach Anspruch 1,
   wobei zumindest entweder die Konstruktion des ersten Flächennetzes, die Konstruktion des zweiten Flächennetzes oder die Kombination des ersten Flächennetzes und des zweiten Flächennetzes interaktiv benutzergeführt durchgeführt wird.

8. Verfahren nach Anspruch 3,
   wobei zumindest entweder die Konstruktion des ersten Flächennetzes, die Konstruktion des zweiten Flächennetzes oder die Vereinigung des ersten Flächennetzes und des zweiten Flächennetzes im Batch-Modus durchgeführt wird,
   wobei eine Folge von zumindest einer Operation, die aus der Gruppe bestehend aus erster Operation, zweiter Operation, dritter Operation und vierter Operation ausgewählt wird, im Voraus bestimmt wird,
   wobei bei der vierten Operation
   das erste Flächennetz ein erstes Netzgrundelement umfasst,
   das zweite Flächennetz ein zweites Netzgrundelement umfasst,
   der erste Netzgrundelement dem zweiten Netzgrundelement entspricht,
   wobei die Kombination des ersten Flächennetzes und des zweiten Flächennetzes die vierte Operation umfasst, die aus der Zusammenführung des ersten Netzgrundelements und des zweiten Netzgrundelements besteht.

9. Bildprozessor zur Konstruktion eines Mehrflächenmodells aus einem mehrdimensionalen Datensatz eines interessierenden Objekts (107), wobei der Bildprozessor Folgendes umfasst:

   einen Speicher zur Speicherung eines mehrdimensionalen Datensatzes,
   eine Recheneinheit (118), die ausgelegt ist für
   die Konstruktion eines anpassungsfähigen ersten Flächennetzes, das einem ersten Teil des interessierenden Objekts (107) entspricht,
   die Konstruktion eines anpassungsfähigen zweiten Flächennetzes, das einem zweiten Teil des interessierenden Objekts (107) entspricht,
   die Kombination des ersten Flächennetzes und des zweiten Flächennetzes, sodass sich ein Mehrflächenmodell des interessierenden Objekts (107) ergibt.

10. Untersuchungsvorrichtung zur Konstruktion eines Mehrflächenmodells aus einem mehrdimensionalen Datensatz eines interessierenden Objekts (107), wobei die Untersuchungsvorrichtung den Bildprozessor nach Anspruch 9 umfasst.

11. Untersuchungsvorrichtung nach Anspruch 10,
    wobei die Untersuchungsvorrichtung (100) aus der Gruppe bestehend aus Ultraschall-Bildgebungssystem, Computertomograph, Computertomograph mit kohärenter Streustrahlung, Positronen-Emissionstomograph, Single-Photon-Emissionstomograph und Kernspintomograph ausgewählt wird.

12. Untersuchungsvorrichtung nach Anspruch 10, die ferner Folgendes umfasst:

    eine Quelle (104) elektromagnetischer Strahlung, die für das Aussenden elektromagnetischer Strahlung auf das interessierende Objekt (107) ausgelegt ist, und
    einen Kollimator (105), der zwischen der Quelle (104) elektromagnetischer Strahlung und Detektoren (123) angeordnet ist,
    wobei der Kollimator (105) für die Kollimation eines von der Quelle (104) elektromagnetischer Strahlung ausgesendeten elektromagnetischen Strahlenbündels ausgelegt ist, um ein Fächerstrahlenbündel oder ein Kegelstrahlenbündel zu bilden.

13. Untersuchungsvorrichtung nach Anspruch 10, die als eine der Gruppe bestehend aus Vorrichtung zur Gepäckkontrolle, Vorrichtung zur medizinischen Anwendung, Vorrichtung zur Materialprüfung oder Vorrichtung zur Materialanalyse konfiguriert ist.

14. Computerlesbares Medium (402), auf dem ein Computerprogramm zur Konstruktion eines Mehrflächenmodells aus einem mehrdimensionalen Datensatz eines interessierenden Objekts (107) unter Verwendung einer Untersuchungsvorrichtung (100) gespeichert ist, das bei Ausführung durch einen Prozessor (401) für die Durchführung der folgenden Schritte ausgelegt ist:

Konstruktion eines anpassungsfähigen ersten Flächennetzes, das einem ersten Teil des interessierenden Objekts (107) entspricht,

Konstruktion eines anpassungsfähigen zweiten Flächennetzes, das einem zweiten Teil des interessierenden Objekts (107) entspricht,

Kombination des ersten Flächennetzes und des zweiten Flächennetzes, sodass sich ein Mehrflächenmodell des interessierenden Objekts (107) ergibt.

**15.** Programmelement zur Konstruktion eines Mehrflächenmodells aus einem mehrdimensionalen Datensatz eines interessierenden Objekts (107), das bei Ausführung durch einen Prozessor (401) für die Durchführung der folgenden Schritte ausgelegt ist:

Konstruktion eines anpassungsfähigen ersten Flächennetzes, das einem ersten Teil des interessierenden Objekts (107) entspricht,

Konstruktion eines anpassungsfähigen zweiten Flächennetzes, das einem zweiten Teil des interessierenden Objekts (107) entspricht,

Kombination des ersten Flächennetzes und des zweiten Flächennetzes, sodass sich ein Mehrflächenmodell des interessierenden Objekts (107) ergibt.

## Revendications

**1.** Procédé de construction d'un modèle multi-surface à partir d'un ensemble de données multidimensionnel d'un objet d'intérêt (107), le procédé comprenant les étapes suivantes :

la construction d'un premier maillage de surface adaptable correspondant à une première partie de l'objet d'intérêt (107) ;

la construction d'un second maillage de surface adaptable correspondant à une seconde partie de l'objet d'intérêt (107) ;

l'association du premier maillage de surface et du second maillage de surface pour obtenir un modèle multi-surface de l'objet d'intérêt (107).

**2.** Procédé selon la revendication 1,
dans lequel le premier maillage de surface est un premier ensemble bidimensionnel et le second maillage de surface est un second ensemble bidimensionnel ;
dans lequel la construction du premier maillage de surface comprend l'étape consistant à adapter le premier maillage de surface à la première partie de l'objet d'intérêt (107) ; et
dans lequel la construction du second maillage de surface comprend l'étape consistant à adapter le second maillage de surface à la seconde partie de l'objet d'intérêt (107).

**3.** Procédé selon la revendication 1,
dans lequel l'association du premier maillage de surface et du second maillage de surface comprend une première opération, une deuxième opération et une troisième opération ;
dans lequel les première, deuxième et troisième opérations sont binaires ;
dans lequel la première opération est une opération d'union ;
dans lequel la deuxième opération est une opération d'intersection ; et
dans lequel la troisième opération est une opération de différence.

**4.** Procédé selon la revendication 1,
dans lequel le premier maillage de surface comprend une première primitive de maillage ;
dans lequel le second maillage de surface comprend une deuxième primitive de maillage ;
dans lequel la première primitive de maillage correspond à la deuxième primitive de maillage ;
dans lequel l'association du premier maillage de surface et du second maillage de surface comprend une quatrième opération ;
dans lequel la quatrième opération est une fusion de la première primitive de maillage et de la deuxième primitive de maillage.

**5.** Procédé selon la revendication 1, comprenant en outre l'étape suivante :

production d'une étiquette correspondant à une troisième primitive du premier maillage de surface ;
dans lequel l'étiquette comprend des informations relatives à la troisième primitive de maillage.

**6.** Procédé selon la revendication 1, comprenant en outre au moins une des étapes suivantes :

le raffinement d'au moins l'un du premier maillage de surface et du second maillage de surface, si la granularité du modèle multi-surface obtenu de l'objet d'intérêt (107) est inférieure à une valeur prédéfinie ; et
le déraffinement d'au moins l'un du premier maillage de surface et du deuxième maillage de surface, si la granularité du modèle multi-surface obtenu de l'objet d'intérêt (107) est supérieure à la valeur prédéfinie.

**7.** Procédé selon la revendication 1,
dans lequel au moins soit la construction du premier maillage de surface, soit la construction du second maillage de surface, soit l'association du premier maillage de surface et du second maillage de surface s'effectue de manière interactive, guidée par un utilisateur.

**8.** Procédé selon la revendication 3,
dans lequel au moins soit la construction du premier maillage de surface, soit la construction du second maillage de surface, soit l'union du premier maillage de surface et du second maillage de surface s'effectue en mode différé ;
dans lequel l'ordre d'au moins une opération choisie dans le groupe constitué d'une première opération, d'une deuxième opération, d'une troisième opération et d'une quatrième opération est prédéterminé ;
dans lequel pour la quatrième opération :

le premier maillage de surface comprend une première primitive de maillage ;
le second maillage de surface comprend une deuxième primitive de maillage ;
la première primitive de maillage correspond à la deuxième primitive de maillage ;
dans lequel l'association du premier maillage de surface et du second maillage de surface comprend la quatrième opération qui est une fusion de la première primitive de maillage et de la deuxième primitive de maillage.

**9.** Dispositif de traitement d'images pour la construction d'un modèle multi-surface à partir d'un ensemble de données multidimensionnel d'un objet d'intérêt (107), le dispositif de traitement d'images comprenant :

une mémoire destinée à stocker un ensemble de données multidimensionnel ;
une unité de calcul (118) conçue pour :

construire un premier maillage de surface adaptable correspondant à une première partie de l'objet d'intérêt (107) ;
construire un second maillage de surface adaptable correspondant à une deuxième partie de l'objet d'intérêt (107) ;
associer le premier maillage de surface et le second maillage de surface pour obtenir un modèle multi-surface de l'objet d'intérêt (107).

**10.** Dispositif d'examen pour la construction d'un modèle multi-surface à partir d'un ensemble de données multidimensionnel d'un objet d'intérêt (107), le dispositif d'examen comprenant le dispositif de traitement d'images selon la revendication 9.

**11.** Dispositif d'examen selon la revendication 10, dans lequel le dispositif d'examen (100) est choisi dans le groupe constitué d'un système d'imagerie ultrasonore, d'un système d'imagerie par tomographie assistée par ordinateur, d'un système d'imagerie par tomographie par diffusion cohérente assistée par ordinateur, d'un système d'imagerie par tomographie par émission de positons, d'un système d'imagerie par tomographie d'émission monophotonique assistée par ordinateur et d'un système d'imagerie par résonance magnétique.

**12.** Dispositif d'examen selon la revendication 10, comprenant en outre :

une source de rayonnement électromagnétique (104) conçue pour émettre un rayonnement électromagnétique vers l'objet d'intérêt (107) ; et

un collimateur (105) agencé entre la source de rayonnement électromagnétique (104) et des éléments de détection (123) ;

dans lequel le collimateur (105) est conçu pour la collimation du faisceau de rayonnement électromagnétique émis par la source de rayonnement électromagnétique (104) afin de former un faisceau en éventail ou un faisceau conique.

13. Dispositif d'examen selon la revendication 10, conçu comme un élément du groupe constitué d'un dispositif d'inspection de bagages, d'un dispositif à usage médical, d'un dispositif de contrôle de matériaux et d'un dispositif d'analyse en science des matériaux.

14. Support lisible par ordinateur (402), sur lequel est stocké un programme informatique de construction d'un modèle multi-surface à partir d'un ensemble de données multidimensionnel d'un objet d'intérêt (107) au moyen d'un dispositif d'examen (100) qui, lorsqu'il est exécuté par un processeur (401), est conçu pour effectuer les étapes suivantes :

la construction d'un premier maillage de surface adaptable correspondant à une première partie de l'objet d'intérêt (107) ;

la construction d'un second maillage de surface adaptable correspondant à une seconde partie de l'objet d'intérêt (107) ;

l'association du premier maillage de surface et du second maillage de surface pour obtenir un modèle multi-surface de l'objet d'intérêt (107).

15. Elément de programme de construction d'un modèle multi-surface à partir d'un ensemble de données multidimensionnel d'un objet d'intérêt (107) qui, lorsqu'il est exécuté par un processeur (401), est conçu pour effectuer les étapes suivantes :

la construction d'un premier maillage de surface adaptable correspondant à une première partie de l'objet d'intérêt (107) ;

la construction d'un second maillage de surface adaptable correspondant à une seconde partie de l'objet d'intérêt (107) ;

l'association du premier maillage de surface et du second maillage de surface pour obtenir un modèle multi-surface de l'objet d'intérêt (107).

FIG 1

Fig. 2

FIG 3

S 1

S 2

S 3

Fig. 4

FIG 5

**EP 1 877 984 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1221674 A2